(19)

(11) **EP 3 869 292 B1**

(12) **EUROPEAN PATENT SPECIFICATION**

(45) Date of publication and mention of the grant of the patent:
**19.06.2024 Bulletin 2024/25**

(21) Application number: **21157356.3**

(22) Date of filing: **16.02.2021**

(51) International Patent Classification (IPC):
***G05D 23/19*** *(2006.01)* ***F24D 19/10*** *(2006.01)*
***F28F 27/00*** *(2006.01)*

(52) Cooperative Patent Classification (CPC):
**G05D 23/1931**

(54) **CONTROL SYSTEM AND METHOD FOR CONTROLLING A CONTROL VALVE OF A HYDRODYNAMIC SYSTEM USING AN ACTUATOR**

STEUERUNGSSYSTEM UND VERFAHREN ZUR STEUERUNG EINES STEUERVENTILS EINES HYDRODYNAMISCHEN SYSTEMS UNTER VERWENDUNG EINES AKTUATORS

SYSTÈME DE COMMANDE ET PROCÉDÉ DE COMMANDE D'UNE SOUPAPE DE COMMANDE D'UN SYSTÈME HYDRODYNAMIQUE À L'AIDE D'UN ACTIONNEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2020 DK PA202000203**

(43) Date of publication of application:
**25.08.2021 Bulletin 2021/34**

(73) Proprietor: **Danfoss A/S**
**6430 Nordborg (DK)**

(72) Inventors:
- **KELLY, John**
  **6430 Nordborg (DK)**
- **CERNEKA, Iztok**
  **6430 Nordborg (DK)**
- **OSOJNIK, Matjaz**
  **6430 Nordborg (DK)**

(74) Representative: **Patentanwälte Olbricht Buchhold Keulertz**
**Partnerschaft mbB**
**Neue Mainzer Straße 75**
**60311 Frankfurt am Main (DE)**

(56) References cited:
**EP-A2- 1 235 131** **WO-A1-2019/020429**

- **Anonymous: "Control Valve Linearization | Control Notes", , 26 November 2011 (2011-11-26), XP055383600, Retrieved from the Internet: URL:http://blog.opticontrols.com/archives/ 689 [retrieved on 2017-06-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 869 292 B1

## Description

The invention relates to a control system and a method for controlling a control valve of a hydrodynamic system using an actuator.

The fluid flow in hydrodynamic systems comprising a heat exchanger is controlled by control valves. Actuators being connected to the control valves open and close the control valves. Those actuators are controlled by control systems. The amount of opening of the control valve defines a particular flow of fluid through the heat exchanger, such as where there is a linear heat transfer output characteristic. The heat exchanger exchanges an amount of thermal energy between the fluid and air. The relationship between the amount of fluid flow through the heat exchanger and the energy transmission of the heat exchanger is determined by a characteristic of the combination of e.g. the actuator, the actuated control valve and the heat transfer characteristic of the heat transfer itself. That characteristic is not always linear, e.g. a 20 % opening of the control valve does not necessarily mean that the energy transmission is 20 % of the full energy transmission of the heat exchanger. The alpha value defines the characteristic of the combination of the actuator and the actuated control valve.

Today, such an alpha value is either predefined, e.g. by the control valve characteristic, or selectable in an actuator. If the alpha value is predefined, it suits only one operation condition of the hydrodynamic system while it is a compromise for other conditions of the hydrodynamic system.

If the alpha value can be predefined on an actuator, the alpha value has to be selected according to the present condition of the hydrodynamic system, which is often not available. Therefore, the predefinition of the alpha value is often either left at default, which is not always optimal, or not used at all, resulting in less than optimal control performance and energy efficiency of the hydrodynamic system.

From EP 1 235 131 A2 it is known to provide a first temperature sensor that measures room temperature. A second temperature sensor measures flow temperature for a heating device. A regulator operates a valve for the through-flow in a heating device. A third temperature sensor measures return temperature for the heating device. The measurement values acquired from these temperature sensors for room air and flow and return temperatures provide the working characteristics for a valve.

Thus, the technical object may be providing an improved control system and a method for controlling a control valve of a hydrodynamic system using an actuator having an optimal control performance and energy efficiency.

Claims 1 and 11 indicate the main features of the invention. Features of embodiments of the invention are subject of claims 2 to 10.

In an aspect of the invention, a control system for controlling a control valve of a hydrodynamic system using an actuator, the hydrodynamic system comprising a heat exchanger with a water inlet, a water outlet, an air inlet, and an air outlet, the control system comprising a water inlet temperature sensor that is configured to determine a water inlet temperature value, a water outlet temperature sensor that is configured to determine a water outlet temperature value, and an air inlet temperature sensor that is configured to determine an air inlet temperature value, wherein the control system is configured to determine an alpha value of a characteristic of the hydrodynamic system from 60 % of the ratio between of the difference between the water inlet temperature value and the water outlet temperature value, and the difference between the water inlet temperature value and the air inlet temperature value, the characteristic showing a relationship between an opening of the control valve and an energy transmission of the heat exchanger, the alpha value determining the characteristic; to set an inverse of the alpha value of the characteristic of the hydrodynamic system as an alpha value of a characteristic of the control valve in combination with the actuator; and to control the control valve with the actuator using the set alpha value of the characteristic of the control valve in combination with the actuator resulting in a linear relationship between the fluid flow through the hydrodynamic system and the energy transmission capacity of the heat exchanger.

The invention therefore provides a control system that sets an alpha value of a characteristic for the combination of the control valve and the actuator being inverse to the alpha value of the characteristic of the hydrodynamic system. That characteristic of the set alpha value mirrors the characteristic of the hydrodynamic system such that the relationship between the fluid flow through the hydrodynamic system and the energy transmission capacity in the heat exchanger is linear. For example a 25% fluid flow results in a 25% energy transmission, wherein a 50% fluid flow results in a 50% energy transmission.

The control system determines the alpha value from the temperatures at the heat exchanger, i.e. the water temperature at the water inlet, water temperature at the water outlet, and the air temperature at the air inlet.

For determining the water temperatures at the water inlet and the water outlet, the control system comprises a water inlet temperature sensor that is configured to determine the water inlet temperature at the water inlet and a water outlet temperature sensor that is configured to determine the water outlet temperature at the water outlet. The water inlet temperature sensor provides a water inlet temperature value to the control system. The water outlet temperature sensor provides a water outlet temperature value to the control system.

For the determination of the air inlet temperature, the control system comprises an air inlet temperature sensor that is configured to determine the air inlet temperature at the air inlet of the heat exchanger. The air inlet temperature sensor provides an air inlet temperature value to the control system.

By using the water inlet temperature value, the water outlet temperature value, and the water inlet temperature value, the control system can determine the alpha value of the characteristic of the hydrodynamic system. Then, the control system is configured to determine an inverse of the alpha value of the characteristic of the hydrodynamic system. That inverse is set as alpha value for the characteristic of the actuator and the control valve, i.e. for the combination of the actuator and the control valve. The control system then controls the actuator according to the characteristic with the set alpha value such that the characteristic with the alpha value of the hydrodynamic system is countered. This results in a linear relationship between the fluid flow through the control valve and the energy transmission of the heat exchanger. Thus, the invention provides a control system for controlling a control valve of the hydrodynamic system using an actuator having an optimal control performance and energy efficiency.

In an example, the control system may further comprise an air outlet temperature sensor that is configured to determine an air outlet temperature value, wherein the control system is further configured to use the air outlet temperature value for determining the alpha value of a characteristic of the hydrodynamic system.

Using the air outlet temperature for the determination of the alpha value of the characteristic of the hydrodynamic system allows to control the heat exchanger such that the air outlet temperature is constant.

In another example, the control valve may be a pressure independent control valve.

The pressure independent control valve provides a stable control characteristic that is independent of changing pressure in the system. This simplifies and improves the use of the inverse of the alpha value for controlling the valve since pressure changes do not change the characteristic of the combination of the actuator and the control valve.

Furthermore, in an example, the actuator may be a digital actuator.

A digital actuator simplifies the use of the inverse of the alpha value of the hydrodynamic system since the digital actuator can receive a setting signal for adjusting the alpha value of the characteristic of the combination of the digital actuator and the control valve. This allows to easily implement the inverse of the alpha value of the hydrodynamic system.

According to a further example, the control system may be configured to repeatedly determine an alpha value of the characteristic of the hydrodynamic system from periodically determined water inlet temperature values, water outlet temperature values, and air inlet temperature values; to periodically set an inverse of the alpha value of the characteristic of the hydrodynamic system as an alpha value of a characteristic of the control valve in combination with the actuator; and to periodically control the control valve with the actuator using the set alpha value of the characteristic of the control valve in combination with the actuator.

In this exemplary embodiment, the control system will determine the alpha value of the characteristic of the hydrodynamic system in regular intervals. Thus, changes of the condition of the hydrodynamic system, which lead to changes of the characteristic of the hydrodynamic system may be taken into account by a new determination of the inverse of the alpha value of the characteristic of the hydrodynamic system. This further improves the control performance and energy efficiency of the hydrodynamic system.

In another example, the air inlet temperature sensor may be arranged on a room controller.

Thus, the control system may use the air inlet temperature sensor of a room controller which already comprises such a sensor. This reduces the number of sensors and the number of parts required for the control system.

In another exemplary embodiment, the control system may further be configured to monitor a heat transfer value for the heat exchanger and if the heat transfer value deteriorates, the control system is further configured to provide a trigger signal.

In that exemplary embodiment, the trigger signal may be an alarm signal for triggering an alarm.

Thus, using the trigger signal may indicate that the efficiency of the hydrodynamic system deteriorates. This deterioration may result from accumulated dirt in the heat exchanger. The alarm may signal a user to take countermeasures.

Alternatively or additionally, the trigger signal may be a scheduling signal for scheduling a maintenance of the hydrodynamic system.

In this example, the trigger signal may schedule a maintenance for the hydrodynamic system such that the maintenance intervals may be dynamically adapted to the requirements of maintenance of the hydrodynamic system. Then, maintenance is only performed, if required, i.e. if scheduled by the trigger signal.

In another example, the control system may further be configured to link the characteristic of the determined alpha value with a fan speed of the hydrodynamic system or with a room set point temperature.

By linking the characteristic of the determined inverse alpha value of the hydrodynamic system with a fan speed or a set point, the control system can further control the fan and or dynamically control the room temperature considering the set alpha value on the actuator.

In another aspect of the invention, computer implemented method for controlling a control valve of a hydrodynamic system using an actuator by a control system according to above description is provided, the method comprising the following steps: determining a water inlet temperature value at the water inlet, a water outlet temperature value at the water outlet and an air inlet temperature value at the air inlet; determining an alpha value of a characteristic of the hydrodynamic system from

% of the ratio between of the difference between the water inlet temperature value and the water outlet temperature value, and the difference between the water inlet temperature value and the air inlet temperature value, the characteristic showing a relationship between an opening of the control valve and an energy transmission of the heat exchanger; and setting an inverse of the alpha value of the characteristic of the hydrodynamic system as an alpha value of a characteristic of the control valve in combination with the actuator; controlling the control valve with the actuator using the set alpha value of the characteristic of the control valve in combination with the actuator, resulting in a linear relationship between the fluid flow through the hydrodynamic system and the energy transmission capacity of the heat exchanger.

The effects and further embodiments of the method according to the present invention are analogous to the effects and embodiments of the control system according to the description mentioned above. Thus, it is referred to the above description of the control system.

Further features, details and advantages of the invention result from the wording of the claims as well as from the following description of exemplary embodiments based on the drawings. The figures show:

Fig. 1 a schematic drawing of a hydrodynamic system;

Fig. 2 a schematic diagram of characteristics;

Fig. 3a, b a schematic diagram of the temperatures of a heat exchanger; and

Fig. 4 a flow diagram of the method for controlling a control valve of a hydrodynamic system.

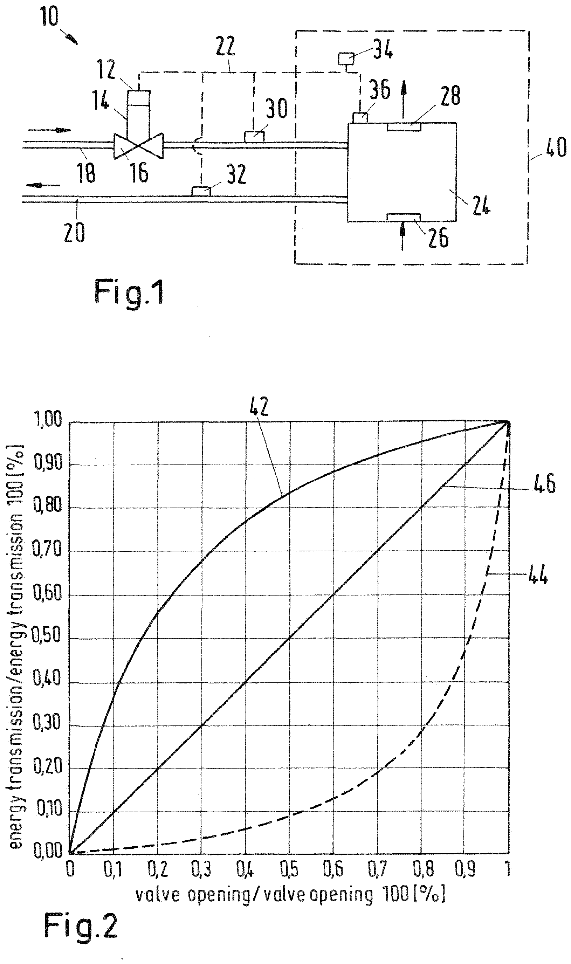

Fig. 1 shows a schematic drawing of a hydrodynamic system 10. The hydrodynamic system 10 comprises a heat exchanger 24 with a water inlet 18, the water outlet 20, an air inlet 26, and an air outlet 28. A control valve 16 controls the flow in the water inlet 18. The control valve 16 is actuated by an actuator 14. The actuator 14 may be a digital actuator.

Furthermore, the control valve 16 may be a pressure independent control valve.

A control system 12 is configured to control the actuator 14. The control system 12 comprises a water outlet temperature sensor 32, a water inlet temperature sensor 30, an air inlet temperature sensor 34, and, optionally, an air outlet temperature sensor 36.

The water inlet temperature sensor 30 is configured to determine the water temperature at the water inlet 18 by providing a water inlet temperature value indicating the water temperature at the water inlet 18. The water in the water inlet 18 and the water inlet temperature sensor 30 may be thermally connected. Alternatively, the water inlet temperature sensor 30 may determine the water temperature at the water inlet 18 in a contactless manner, e.g. by measuring infrared radiation.

The water outlet temperature sensor 32 is configured to determine the water temperature at the water outlet 20 by providing a water outlet temperature value indicating the water temperature at the water outlet 20. The water in the water outlet 20 and the water outlet temperature sensor 32 may be thermally connected. Alternatively, the water outlet temperature sensor 32 may determine the water temperature at the water outlet 20 in a contactless manner, e.g. by measuring infrared radiation.

The air inlet temperature sensor 34 is configured to determine the air temperature of the air flowing through the air inlet 26. That air temperature may be a room temperature of a room 40. Therefore, the air inlet temperature sensor 34 may be a room temperature sensor of a room controller. The air inlet temperature sensor 34 and the air flowing through the air inlet 26 may be in thermal contact. Alternatively, the air inlet temperature sensor 34 may determine the temperature of the air flowing through the air inlet 26 by a contactless measurement, e.g. by infrared radiation measurements.

The optional air outlet temperature sensor 36 is configured to determine the air temperature of the air flowing out of the air outlet 28. The air flowing through the air outlet 28 and the air outlet temperature sensor 36 may be thermally connected. Alternatively, the air outlet temperature sensor 36 may determine the air temperature flowing through the air outlet 28 in a contactless manner, e.g. by measuring infrared radiation.

The control system 12 may repeatedly determine the alpha value of the characteristic of the hydrodynamic system 10. For example, the control system 12 may determine the alpha value in predetermined time intervals. Furthermore, for determining the alpha value, the control system 12 may periodically determine the water inlet temperature, the water outlet temperature, and the air outlet temperature. Furthermore, at those time intervals, the determined alpha values may be used to determine an inverse of the alpha value for the characteristic of the hydrodynamic system 10. Then, in each time interval, the control system 12 may set the determined inverse of the alpha value as alpha value for a characteristic in the actuator 14 in combination with the control valve 16. In each time interval, the control system 12 controls the actuator 14 with the characteristic based on the latest determined inverse of the alpha value of the hydrodynamic system 10.

The control system 12 may also monitor a heat transfer value in the heat exchanger 24. If the heat transfer value deteriorates, the control system 12 provides a trigger signal.

That trigger signal may for example be an alarm signal for triggering an alarm. In that case, a user of the control system will be alerted, if the heat transfer value deteriorates. The user can then take countermeasures for countering the deterioration of the heat transfer value in the heat exchanger 24.

Alternatively, the trigger signal may be a scheduling signal for scheduling the maintenance of the hydrodynamic system 10. In that case, a maintenance of the hydrodynamic system 10 is scheduled. The scheduling may be performed considering a schedule of the person, who provides the maintenance. By scheduling the maintenance of the hydrodynamic system 10, the maintenance intervals may be adapted to the actual requirements for maintenance of the hydrodynamic system. Therefore, the maintenance scheduled by the trigger signal is more cost-efficient than a maintenance according to a constant time interval.

Furthermore, the control system 12 may link the characteristic of the determined alpha value with a fan speed of the hydrodynamic system 10 or a room set point temperature. In that case, the control system can also operate the fan speed of the hydrodynamic system 10 or the room set point temperature, respectively, using the characteristic of the determined alpha value.

The hydrodynamic system 10 may comprise a characteristic 42 which shows the relationship between the opening of the control valve 16 and the energy transmission of the heat exchanger 24. The opening of the control valve 16 indicates the flow through the control valve 16. An example of a characteristic 42 is shown in fig. 2.

The characteristic 42 shown in fig. 2 is not linear. For example at the characteristic 42, a valve opening of 0.1, which is 10% of the maximum opening of the control valve 16, results in an energy transmission of about 0.35, which is 35% of the maximum energy transmission at the heat exchanger 24. Furthermore, having the characteristic 42, a valve opening of 0.5 results in an energy transmission of about 0.83. A control relying on that characteristic 42 results in a very inefficient control and operation of the hydrodynamic system 10.

The characteristic 42 is defined by an alpha value. The control system 12 determines the alpha value by using the water inlet temperature value, the water outlet temperature value and the air inlet temperature value. Optionally, the air outlet temperature value may be used.

The control system 12 will then determine a further alpha value characteristic 44, e.g. being inverse of the characteristic 42. Fig. 2 shows the further characteristic 44 in dashed lines. The alpha value of the further characteristic 44 is set into the actuator 14. The result is that the combination of the actuator 14 and the control valve 16 has the further characteristic 44. The further characteristic 44 mirrors the characteristic 42 such that when the actuator 14 actuates the control valve 16, the resulting characteristic for the hydrodynamic system 10 is linear as shown in the linear characteristic 46 in fig. 2.

By using the further characteristic for the actuator 14 and the control valve 16, the hydrodynamic system 10 is operated with an optimal control performance and energy efficiency.

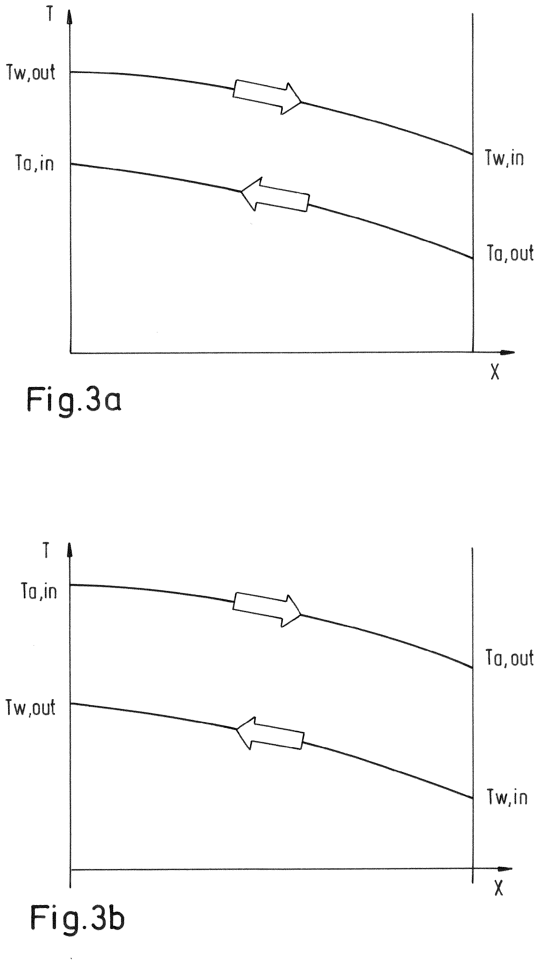

Fig. 3a shows the temperatures in the heat exchanger 24 of the water and the air, if the heat exchanger 24 is used for heating up the air flowing through the heat exchanger 24. From left to right the path in the heat exchanger is shown. The water enters the heat exchanger 24 at position 0 of the coordinate system. Furthermore, the water leaves the heat exchanger 24 at the vertical line at the right of the diagram. The air enters the heat exchanger 24 at the vertical line at the right of the diagram. Furthermore, the air leaves the heat exchanger 24 at position 0 of the coordinate system.

At position 0, which refers to the air outlet 28, the temperature of the air is higher than at the air inlet 26. Furthermore at position 0, which also refers to the water inlet 18, the temperature of the water is higher than at the water outlet 20. This means, the water entering the heat exchanger 24 is cooled down, wherein the air entering the heat exchanger 24 is heated up.

In this case, the alpha value can be calculated with the following equation:

$$\alpha = 0,6 * \frac{T_{w,inlet} - T_{w,outlet}}{T_{w,inlet} - T_{a,inlet}}$$

wherein $\alpha$ is the alpha value of the hydrodynamic system 10, $T_{w,inlet}$ is the water inlet temperature, $T_{w,outlet}$ is the water outlet temperature, and $T_{a,inlet}$ is the air inlet temperature.

Fig. 3b shows the temperatures in the heat exchanger 24 of the water and the air, if the heat exchanger 24 is used for cooling down the air flowing through the heat exchanger 24. From left to right the path in the heat exchanger is shown. The air enters the heat exchanger 24 at position 0 of the coordinate system. Furthermore, the air leaves the heat exchanger 24 at the vertical line at the right of the diagram. The water enters the heat exchanger 24 at the vertical line at the right of the diagram. Furthermore, the water leaves the heat exchanger 24 at position 0 of the coordinate system.

In this case, the alpha value can be calculated with the following equation:

$$\alpha = 0,6 * \frac{T_{w,inlet} - T_{w,outlet}}{T_{w,inlet} - T_{a,outlet}}$$

wherein $\alpha$ is the alpha value of the hydrodynamic system 10, $T_{w,inlet}$ is the water inlet temperature, $T_{w,outlet}$ is the water outlet temperature, and $T_{a,outlet}$ is the air outlet temperature.

At position 0, which refers to the water outlet 20, the temperature of the water is higher than at the water inlet 18. Furthermore at position 0, which also refers to the air inlet 26, the temperature of the air is higher than at the air outlet 28. This means, the water entering the heat exchanger 24 is heated up, wherein the air entering the heat exchanger 24 is cooled down.

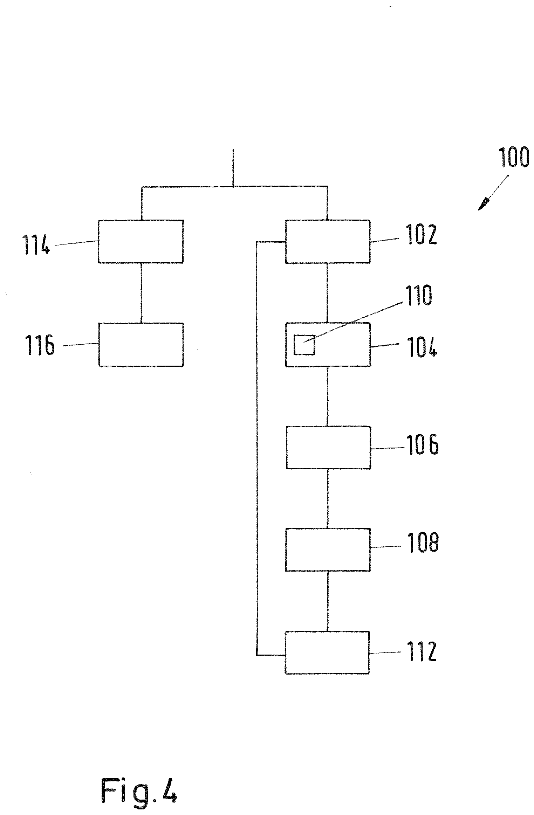

Fig. 4 shows a diagram of a computer implemented method 100 for controlling a control valve of a hydrodynamic system using an actuator. The computer implemented method 100 may be performed by a control system according to the above description. The actuator may be a digital actuator. Furthermore, the control valve may be a pressure independent control valve.

In a first step 102, a water inlet temperature value may be determined at a water inlet of the hydrodynamic system. The water inlet temperature value may be determined by a water inlet temperature sensor of the control system.

Furthermore in step 102, a water outlet temperature value may be determined at the water outlet of the hydrodynamic system. A water outlet temperature sensor of the control system may determine the water outlet temperature value.

Also in step 102, an air inlet temperature value may be determined at an air inlet of the hydrodynamic system. An air inlet temperature sensor of the control system may determine the air inlet temperature value.

Optionally, in step 102, an air outlet temperature value may be determined at an air outlet of the hydrodynamic system. An air outlet temperature sensor of the control system may determine the air outlet temperature value.

In a further step 104, the alpha value of a characteristic of hydrodynamic system is determined. The determination may be performed using the water inlet temperature value, the water outlet temperature value, and the air inlet temperature value. In an optional sub step 110 of step 104, the air outlet temperature value may be used to determine the alpha value of the characteristic of the hydrodynamic system.

In a further step 106, an inverse of the alpha value of the characteristic of the hydrodynamic system may be determined. That inverse of the alpha value may be set as alpha value of a characteristic of the combination of the actuator and the control valve.

Furthermore, in a step 108, the actuator is controlled with the set alpha value of the characteristic of the combination of the control valve and the actuator. Therefore, also the control valve is controlled with the set alpha value of the characteristic of the control valve in combination with the actuator.

In a further optional step 112, the alpha value of the characteristic of hydrodynamic system may be repeatedly determined. The repeated determination may be performed by periodically determining water inlet temperature values, water outlet temperature values, and air inlet temperature values. Furthermore, air outlet temperature values may be determined periodically. After each repeated determination, and inverse of the alpha value may be calculated and set as alpha value for a characteristic of the actuator and the control valve. After each setting of the alpha value for the actuator and the control valve, the actuator and the control valve may be controlled with the set alpha value.

In a further step 114, a heat transfer value of the heat exchanger may be monitored. If the heat transfer value deteriorates, a trigger signal may be provided.

That trigger signal may be an alarm signal for triggering an alarm or a scheduling signal for scheduling and maintenance of the hydrodynamic system.

Furthermore, in a step 116, the characteristic of the determined alpha value may be linked with a fan speed of the hydrodynamic system or with a room set point temperature.

## Claims

1. Control system for controlling a control valve (16) of a hydrodynamic system (10) using an actuator (14), the hydrodynamic system (10) comprising a heat exchanger (24) with a water inlet (18), a water outlet (20), an air inlet (26), and an air outlet (28), the control system (12) comprising a water inlet temperature sensor (30) that is configured to determine a water inlet temperature value, a water outlet temperature sensor (32) that is configured to determine a water outlet temperature value, and an air inlet temperature sensor (34) that is configured to determine an air inlet temperature value, **characterised in that** the control system (12) is configured to determine an alpha value of a characteristic of the hydrodynamic system (10) from 60 % of the ratio between of the difference between the water inlet temperature value and the water outlet temperature value and the difference between the water inlet temperature value and the air inlet temperature value, the characteristic showing a relationship between an opening of the control valve (16) and an energy transmission of the heat exchanger (24), the alpha value determining the characteristic, to set an inverse of the alpha value of the characteristic of the hydrodynamic system (10) as an alpha value of a characteristic of the control valve (16) in combination with the actuator (14); and to control the control valve (16) with the actuator (14) using the set alpha value of the characteristic of the control valve (16) in combination with the actuator (14) resulting in a linear relationship between the fluid flow through the hydrodynamic system (10) and the energy transmission capacity of the heat exchanger (24).

2. Control system according to claim 1, **characterized in that** the control system (12) further comprises an air outlet temperature sensor (36) that is configured to determine an air outlet temperature value, wherein the control system (12) is further configured to use the air outlet temperature value for determining the alpha value of a characteristic of the hydrodynamic system (10).

3. Control system according to claim 1 or 2, **characterized in that** the control valve (16) is a pressure independent control valve (16).

4. Control system according to one of claims 1 to 3, **characterized in that** the actuator (14) is a digital actuator (14).

5. Control system according to one of claims 1 to 4, **characterized in that** the control system (12) is configured to repeatedly determine an alpha value of the characteristic of the hydrodynamic system (10) from periodically determined water inlet temperature values, water outlet temperature values, and air inlet temperature values; to periodically set an inverse of the alpha value of the characteristic of the hydrodynamic system (10) as an alpha value of a characteristic of the control valve (16) in combination with the actuator (14); and to periodically control the control valve (16) with the actuator (14) using the set alpha value of the characteristic of the control valve (16) in combination with the actuator (14).

6. Control system according to one of claims 1 to 5, **characterized in that** the air inlet temperature sensor (34) is arranged on a room controller.

7. Control system according to one of claims 1 to 6, **characterized in that** the control system (12) is further configured to monitor a heat transfer value for the heat exchanger (24) and if the heat transfer value deteriorates, the control system (12) is further configured to provide a trigger signal.

8. Control system according to claim 7, **characterized in that** the trigger signal is an alarm signal for triggering an alarm.

9. Control system according to claim 7, **characterized in that** the trigger signal is a scheduling signal for scheduling a maintenance of the hydrodynamic system (10).

10. Control system according to one of claims 1 to 9, **characterized in that** the control system (12) is further configured to link the characteristic of the determined alpha value with a fan speed of the hydrodynamic system (10) or with a room set point temperature.

11. Method for controlling a control valve of a hydrodynamic system using an actuator by a control system according to one of the preceding claims, the method (100) comprising the following steps:

- Determining (102) a water inlet temperature value at the water inlet, a water outlet temperature value at the water outlet and an air inlet temperature value at the air inlet; **characterised by**
- Determining (104) an alpha value of a characteristic of the hydrodynamic system from 60 % of the ratio between of the difference between the water inlet temperature value and the water outlet temperature value and the difference between the water inlet temperature value and the air inlet temperature value, the characteristic showing a relationship between an opening of the control valve and an energy transmission of the heat exchanger; and
- Setting (106) an inverse of the alpha value of the characteristic of the hydrodynamic system as an alpha value of a characteristic of the control valve in combination with the actuator, resulting in a linear relationship between the fluid flow through the hydrodynamic system and the energy transmission capacity of the heat exchanger;
- Controlling (108) the control valve with the actuator using the set alpha value of the characteristic of the control valve in combination with the actuator.

**Patentansprüche**

1. Steuerungssystem zum Steuern eines Steuerventils (16) eines hydrodynamischen Systems (10) unter Verwendung eines Aktuators (14), wobei das hydrodynamische System (10) einen Wärmetauscher (24) mit einem Wassereinlass (18), einem Wasserauslass (20), einem Lufteinlass (26) und einem Luftauslass (28) umfasst, wobei das Steuerungssystem (12) einen Wassereinlasstemperatursensor (30), der zum Bestimmen eines Wassereinlasstemperaturwerts konfiguriert ist, einen Wasserauslasstemperatursensor (32), der zum Bestimmen eines Wasserauslasstemperaturwerts konfiguriert ist, und einen Lufteinlasstemperatursensor (34) umfasst, der zum Bestimmen einer Lufteinlasstemperaturwerts konfiguriert ist, **dadurch gekennzeichnet, dass**

das Steuerungssystem (12) dazu konfiguriert ist, einen Alpha-Wert einer Kenngröße des hydrodynamischen Systems (10) aus 60 % des Verhältnisses zwischen der Differenz zwischen dem Wassereinlasstemperaturwert und dem Wasserauslasstemperaturwert und der Differenz zwischen dem Wassereinlasstemperaturwert und dem Lufteinlasstemperaturwert zu bestimmen, wobei die Kenngröße eine Beziehung zwischen einer Öffnung des Steuerventils (16) und einer Energieübertragung des Wärmetauschers (24) darstellt, wobei der Alpha-Wert die Kenngröße bestimmt,
einen Kehrwert des Alpha-Werts der Kenngröße des hydrodynamischen Systems (10) als einen Alpha-Wert einer Kenngröße des Steuerventils (16) in Kombination mit dem Aktuator (14) festzulegen; und das Steuerventil (16) mit dem Aktuator (14) unter Verwendung des festgelegten Alpha-Werts der Kenngröße des Steuerventils (16) in Kombination mit dem Aktuator (14) zu steuern, was zu einer linearen Beziehung zwischen der Flüssigkeitsströmung durch das hydrodynamische System (10) und der Energieübertragungskapazität des Wärmetauschers (24) führt.

2. Steuerungssystem nach Anspruch 1, **dadurch gekennzeichnet, dass** das Steuerungssystem (12) ferner einen Luftauslasstemperatursensor (36) umfasst, der zum Bestimmen eines Luftauslasstemperaturwerts konfiguriert ist, wobei das Steuerungssystem (12) ferner dazu konfiguriert ist, den Luftauslasstemperaturwert zum Bestimmen des Alpha-Werts einer Kenngröße des hydrodynamischen Systems (10) zu verwenden.

3. Steuerungssystem nach Anspruch 1 oder 2, **dadurch gekennzeichnet, dass** das Steuerventil (16) ein druckunabhängiges Steuerventil (16) ist.

4. Steuerungssystem nach einem der Ansprüche 1 bis 3, **dadurch gekennzeichnet, dass** der Aktuator (14) ein digitaler Aktuator (14) ist.

5. Steuerungssystem nach einem der Ansprüche 1 bis 4, **dadurch gekennzeichnet, dass** das Steuerungssystem (12) dazu konfiguriert ist, wiederholt einen Alpha-Wert der Kenngröße des hydrodynamischen Systems (10) aus periodisch bestimmten Wassereinlasstemperaturwerten, Wasserauslasstemperaturwerten und Lufteinlasstemperaturwerten zu bestimmen; periodisch einen Kehrwert des Alpha-Werts der Kenngröße des hydrodynamischen Systems (10) als einen Alpha-Wert einer Kenngröße des Steuerventils (16) in Kombination mit dem Aktuator (14) festzulegen; und periodisch das Steuerventil (16) mit dem Aktuator (14) unter Verwendung des festgelegten Alpha-Werts der Kenngröße des Steuerventils (16) in Kombination mit dem Aktuator (14) zu steuern.

6. Steuerungssystem nach einem der Ansprüche 1 bis 5, **dadurch gekennzeichnet, dass** der Lufteinlasstemperatursensor (34) auf einem Raumregler angeordnet ist.

7. Steuerungssystem nach einem der Ansprüche 1 bis 6, **dadurch gekennzeichnet, dass** das Steuerungssystem (12) ferner dazu konfiguriert ist, einen Wärmeübergangswert für den Wärmetauscher (24) zu überwachen, und das Steuerungssystem (12) ferner dazu konfiguriert ist, ein Auslösesignal bereitzustellen, wenn sich der Wärmeübergangswert verschlechtert.

8. Steuerungssystem nach Anspruch 7, **dadurch gekennzeichnet, dass** das Auslösesignal ein Alarmsignal zum Auslösen eines Alarms ist.

9. Steuerungssystem nach Anspruch 7, **dadurch gekennzeichnet, dass** das Auslösesignal ein Planungssignal zum Planen einer Wartung des hydrodynamischen Systems (10) ist.

10. Steuerungssystem nach einem der Ansprüche 1 bis 9, **dadurch gekennzeichnet, dass** das Steuerungssystem (12) ferner dazu konfiguriert ist, die Kenngröße des bestimmten Alpha-Werts mit einer Lüftergeschwindigkeit des hydrodynamischen Systems (10) oder einem Raumtemperatur-Sollwert zu verknüpfen.

11. Verfahren zur Steuerung eines Steuerventils eines hydrodynamischen Systems unter Verwendung eines Aktuators durch ein Steuerungssystem nach einem der vorhergehenden Ansprüche, wobei das Verfahren (100) die folgenden Schritte umfasst:

- Bestimmen (102) eines Wassereinlasstemperaturwerts am Wassereinlass, eines Wasserauslasstemperaturwerts am Wasserauslass und eines Lufteinlasstemperaturwerts am Luftauslass; **gekennzeichnet durch**
- Bestimmen (104) eines Alpha-Werts einer Kenngröße des hydrodynamischen Systems aus 60 % des Verhältnisses zwischen der Differenz zwischen dem Wassereinlasstemperaturwert und dem Wasserauslasstemperaturwert und der Differenz zwischen dem Wassereinlasstemperaturwert und dem Lufteinlasstemperaturwert, wobei die Kenngröße eine Beziehung zwischen einer Öffnung des Steuerventils und einer Energieübertragung des Wärmetauschers darstellt; und
- Festlegen (106) eines Kehrwerts des Alpha-Wert der Kenngröße des hydrodynamischen Systems als einen Alpha-Wert einer Kenngröße des Steuerventils in Kombination mit dem Aktuator, was zu einer linearen Beziehung zwischen der Flüssigkeitsströmung durch das hydrodynamische System und der Energieübertragungskapazität des Wärmetauschers führt;
- Steuern (108) des Steuerventils mit dem Aktuator unter Verwendung des festgelegten Alpha-Werts der Kenngröße des Steuerventils in Kombination mit dem Aktuator.

## Revendications

1. Système de commande destiné à commander une vanne de régulation (16) d'un système hydrodynamique (10) au moyen d'un actionneur (14), le système hydrodynamique (10) comprenant un échangeur de chaleur (24) avec une entrée d'eau (18), une sortie d'eau (20), une entrée d'air (26) et une sortie d'air (28), le système de commande (12) comprenant un capteur de température d'entrée d'eau (30) qui est configuré pour déterminer une valeur de température d'entrée d'eau, un capteur de température de sortie d'eau (32) qui est configuré pour déterminer une valeur de température de sortie d'eau, et un capteur de température d'entrée d'air (34) qui est configuré pour déterminer une valeur de température d'entrée d'air, **caractérisé en ce que**
le système de commande (12) est configuré pour déterminer une valeur alpha d'une caractéristique du système hydrodynamique (10) à partir de 60 % du rapport entre la différence entre la valeur de température d'entrée d'eau et la valeur de température de sortie d'eau et la différence entre la valeur de température d'entrée d'eau et la valeur de température d'entrée d'air, la caractéristique montrant une relation entre une ouverture de la vanne de régulation (16) et une transmission d'énergie de l'échangeur de chaleur (24), la valeur alpha déterminant la caractéristique, pour régler un inverse de la valeur alpha de la caractéristique du système hydrodynamique (10) en tant que valeur alpha d'une caractéristique de la vanne de régulation (16) en combinaison avec l'actionneur (14), et pour commander la vanne de régulation (16) avec l'actionneur (14) en utilisant la valeur alpha réglée de la caractéristique de la vanne de régulation (16) en combinaison avec l'actionneur (14) se traduisant par une relation linéaire entre l'écoulement de fluide à travers le système hydrodynamique (10) et la capacité de transmission d'énergie de l'échangeur de chaleur (24).

**2.** Système de commande selon la revendication 1, **caractérisé en ce que** le système de commande (12) comprend en outre un capteur de température de sortie d'air (36) qui est configuré pour déterminer une valeur de température de sortie d'air, le système de commande (12) étant en outre configuré pour utiliser la valeur de température de sortie d'air pour déterminer la valeur alpha d'une caractéristique du système hydrodynamique (10).

**3.** Système de commande selon la revendication 1 ou 2, **caractérisé en ce que** la vanne de régulation (16) est une vanne de régulation indépendante de la pression (16).

**4.** Système de commande selon une des revendications 1 à 3, **caractérisé en ce que** l'actionneur (14) est un actionneur numérique (14).

**5.** Système de commande selon une des revendications 1 à 4, **caractérisé en ce que** le système de commande (12) est configuré pour déterminer de façon répétée une valeur alpha de la caractéristique du système hydrodynamique (10) à partir de valeurs de température d'entrée d'eau, de valeurs de température de sortie d'eau et de valeurs de température d'entrée d'air déterminées périodiquement, pour régler périodiquement un inverse de la valeur alpha de la caractéristique du système hydrodynamique (10) en tant que valeur alpha d'une caractéristique de la vanne de régulation (16) en combinaison avec l'actionneur (14), et pour commander périodiquement la vanne de régulation (16) avec l'actionneur (14) en utilisant la valeur alpha réglée de la caractéristique de la vanne de régulation (16) en combinaison avec l'actionneur (14).

**6.** Système de commande selon une des revendications 1 à 5, **caractérisé en ce que** le capteur de température d'entrée d'air (34) est disposé sur un régulateur d'ambiance.

**7.** Système de commande selon une des revendications 1 à 6, **caractérisé en ce que** le système de commande (12) est en outre configuré pour surveiller une valeur de transfert de chaleur pour l'échangeur de chaleur (24), et si la valeur de transfert de chaleur se détériore, le système de commande (12) est en outre configuré pour délivrer un signal de déclenchement.

**8.** Système de commande selon la revendication 7, **caractérisé en ce que** le signal de déclenchement est un signal d'alarme pour déclencher une alarme.

**9.** Système de commande selon la revendication 7, **caractérisé en ce que** le signal de déclenchement est un signal de planification pour planifier un entretien du système hydrodynamique (10).

**10.** Système de commande selon une des revendications 1 à 9, **caractérisé en ce que** le système de commande (12) est en outre configuré pour lier la caractéristique de la valeur alpha déterminée à une vitesse de ventilateur du système hydrodynamique (10) ou à une température de consigne d'ambiance.

**11.** Procédé de commande d'une vanne de régulation d'un système hydrodynamique au moyen d'un actionneur par un système de commande selon une des revendications précédentes, le procédé (100) comprenant les étapes suivantes :

- détermination (102) d'une valeur de température d'entrée d'eau à l'entrée d'eau, d'une valeur de température de sortie d'eau à la sortie d'eau et d'une valeur de température d'entrée d'air à l'entrée d'air, **caractérisé par**
- la détermination (104) d'une valeur alpha d'une caractéristique du système hydrodynamique à partir de 60 % du rapport entre la différence entre la valeur de température d'entrée d'eau et la valeur de température de sortie d'eau et la différence entre la valeur de température d'entrée d'eau et la valeur de température d'entrée d'air, la caractéristique montrant une relation entre une ouverture de la vanne de régulation et une transmission d'énergie de l'échangeur de chaleur ; et

- le réglage (106) d'un inverse de la valeur alpha de la caractéristique du système hydrodynamique en tant que valeur alpha d'une caractéristique de la vanne de régulation en combinaison avec l'actionneur, se traduisant par une relation linéaire entre l'écoulement de fluide à travers le système hydrodynamique et la capacité de transmission d'énergie de l'échangeur de chaleur ;
- la commande (108) de la vanne de régulation avec l'actionneur au moyen de la valeur alpha réglée de la caractéristique de la vanne de régulation en combinaison avec l'actionneur.

10
22
34
12
14
36
28
30
40
18
16
32
24
20
26

Fig.1

42
46
44
1,00
0,90
0,80
0,70
0,60
0,50
0,40
0,30
0,20
0,10
0,00
0
0,1
0,2
0,3
0,4
0,5
0,6
0,7
0,8
0,9
1
energy transmission/energy transmission 100 [%]
valve opening/ valve opening 100 [%]

Fig.2

T
Tw,out
Ta,in
Tw,in
Ta,out
X

Fig.3a

T
Ta,in
Ta,out
Tw,out
Tw,in
X

Fig.3b

100
114
102
110
116
104
106
108
112

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1235131 A2